Europäisches Patentamt

European Patent Office

Office européen des brevets

(19)

(11) Numéro de publication : **0 214 012 B1**

(12) **FASCICULE DE BREVET EUROPÉEN**

(45) Date de publication du fascicule du brevet :
23.11.89

(51) Int. Cl.⁴ : **A 45 D 40/26**, G 01 F 11/02

(21) Numéro de dépôt : **86401687.8**

(22) Date de dépôt : **29.07.86**

(54) Dispositif de distribution en quantités dosées d'au moins un produit relativement visqueux.

(30) Priorité : 13.08.85 FR 8512333

(43) Date de publication de la demande :
11.03.87 Bulletin 87/11

(45) Mention de la délivrance du brevet :
23.11.89 Bulletin 89/47

(84) Etats contractants désignés :
BE CH DE FR GB IT LI NL

(56) Documents cités :
CH—A— 253 356
DE—C— 112 732
FR—A— 2 541 244
FR—E— 80 720
US—A— 3 468 612
US—A— 4 040 420
US—A— 4 261 481

(73) Titulaire : **L'OREAL**
**14, Rue Royale**
**F-75008 Paris (FR)**

(72) Inventeur : **Goncalves, Antonin**
**41, rue du Lac Marchais**
**F-95410 Groslay (FR)**

(74) Mandataire : **Peuscet, Jacques**
**Cabinet Peuscet 68, rue d'Hauteville**
**F-75010 Paris (FR)**

## Description

La présente invention se rapporte à un dispositif de distribution en quantités dosées d'au moins un produit relativement visqueux, en particulier d'un produit cosmétique ; l'invention a plus particulièrement trait à un dispositif du type stylo doseur pour distribuer ce produit goutte à goutte, ou pour distribuer simultanément et goutte à goutte deux produits à mélanger pour un traitement particulier.

On utilise déjà, notamment dans les industries de la parfumerie et de la cosmétologie, des stylos doseurs pour distribuer goutte à goutte des crèmes, laits ou gels de toilette qui sont des produits relativement onctueux destinés aux soins corporels.

Ces stylos doseurs connus comprennent un corps tubulaire, qui délimite une chambre de produit, destinée à contenir une charge d'un produit à distribuer ; le corps se prolonge, à une première extrémité, par un nez, dont le bout présente un orifice de distribution de petit diamètre ; ce nez est susceptible d'être recouvert d'un capot amovible d'obturation étanche de l'orifice de distribution ; le corps contient également des moyens de pressurisation, qui sont actionnés par un poussoir accessible de l'extérieur du corps, et qui sont destinés à faire pénétrer un volume d'air sous pression dans la chambre de produit, afin de chasser une quantité dosée du produit par l'orifice de distribution du nez, lorsque le capot est retiré et que le poussoir est enfoncé vers l'intérieur du corps, à partir d'une position initiale ; cet enfoncement du poussoir est assuré à l'encontre d'un ressort de rappel, qui tend à repousser le poussoir vers l'extérieur du corps, dans sa position initiale, et à permettre aux moyens de pressurisation d'assurer une fermeture étanche de la chambre de produit du côté de la seconde extrémité du corps tubulaire.

Dans ces dispositifs connus, qui ne permettent la distribution que d'un seul produit, les moyens de pressurisation constituent une pompe à deux étages et comprennent un grand nombre de pièces différentes.

De ce fait, ces stylos doseurs connus sont d'une structure complexe et, en conséquence, d'une réalisation coûteuse, et leur domaine d'utilisation est limité.

Par la présente invention, on se propose, d'une part, de réaliser un stylo doseur procurant, à l'utilisation, les mêmes résultats que les dispositifs connus, mais ayant une structure simplifiée, et étant donc susceptible d'être fabriqué à un prix de revient abordable très inférieur à ceux des dispositifs connus de ce type. D'autre part, on se propose de réaliser un stylo doseur adapté à la distribution simultanée de plusieurs produits qui doivent être maintenus isolés les uns des autres dans le distributeur, et en particulier un stylo doseur double, pour la distribution simultanée et goutte à goutte de deux produits qui peuvent être mélangés après distribution, pour effectuer des traitements particuliers.

L'invention a pour objet le produit industriel nouveau que constitue un stylo doseur, destiné à distribuer en quantités dosées au moins un produit relativement visqueux, en particulier un produit cosmétique, et du type comprenant un corps tubulaire, qui délimite au moins une chambre de produit destinée à contenir une charge d'un produit à distribuer et qui se prolonge, à une première extrémité, par au moins un nez dont le bout présente au moins un orifice de distribution de petit diamètre, susceptible d'être obturé de manière étanche par la fixation d'un bouchon amovible sur le nez correspondant, le corps contenant également des moyens de pressurisation qui sont actionnés par un poussoir accessible de l'extérieur du corps et qui sont destinés à faire pénétrer un volume d'air sous pression dans chaque chambre de produit, afin de chasser une quantité dosée du produit correspondant par un orifice de distribution correspondant d'un nez, lorsque le bouchon est retiré et que le poussoir est enfoncé vers l'intérieur du corps, à partir d'une position initiale et à l'encontre d'au moins un ressort de rappel, chaque ressort de rappel tendant à repousser le poussoir vers l'extérieur du corps, dans sa position initiale, et à permettre aux moyens de pressurisation d'assurer une fermeture étanche de chaque chambre de produit du côté de la seconde extrémité du corps, et ce dispositif se caractérise par le fait que, pour chaque produit, les moyens de pressurisation forment un ensemble comprenant, d'une part, un clapet dont l'obturateur mobile est lié à un piston accompagnant le poussoir dans ses déplacements et se trouve appliqué de manière étanche contre un siège de clapet, qui entoure une ouverture de pressurisation ménagée dans une cloison interne du corps, lorsque le poussoir est repoussé dans sa position initiale, tandis que l'obturateur de clapet est écarté de son siège lorsque le poussoir est enfoncé vers l'intérieur du corps, d'autre part, chaque ensemble de moyens de pressurisation comprend une jupe mobile, liée au piston accompagnant le poussoir dans ses déplacements, et délimitant avec une partie tubulaire du corps, une chambre de pressurisation à volume variable, chaque chambre de pressurisation étant d'un volume maximal et en communication avec l'atmosphère ambiante lorsque le poussoir occupe sa position initiale, et chaque chambre de pressurisation diminuant de volume et étant isolée de l'atmosphère ambiante par la venue en contact coulissant et étanche de la jupe correspondante contre la partie tubulaire correspondante du corps, lorsque le poussoir est enfoncé vers l'intérieur du corps, de sorte que de l'air comprimé dans chaque chambre de pressurisation s'écoule dans la chambre de produit correspondante en passant par l'ouverture de pressurisation correspondante.

Dans chaque ensemble de moyens de pressurisation, la liaison en déplacement de l'obturateur et du piston est avantageusement assurée de manière fiable par le fait que l'obturateur est solidarisé au piston par l'intermédiaire d'une tige s'étendant à l'intérieur du corps.

Dans une forme de réalisation préférée, simple à fabriquer et à mettre en œuvre, la solidarisation de chaque obturateur au piston correspondant est assurée par encliquetage élastique. Selon une première variante, chaque tige est d'une seule pièce avec le piston correspondant et porte, à son extrémité libre, une tête élargie et élastiquement déformable, qui vient s'encliqueter élastiquement dans un trou ménagé dans l'obturateur correspondant. Cependant, afin de faciliter l'assemblage des pièces constitutives de celle des parties d'extrémité du stylo doseur qui comprend le poussoir, chaque tige est, selon une seconde variante, d'une seule pièce avec l'obturateur correspondant et est entourée, dans sa partie d'extrémité libre, d'au moins un bourrelet périphérique par lequel la tige est élastiquement encliquetée dans une gorge correspondante formée dans la paroi latérale d'un évidement ménagé dans le piston correspondant et dans lequel est engagée la partie d'extrémité libre de la tige.

Afin d'assurer une liaison fiable en déplacement de chaque jupe et du piston correspondant, ainsi qu'une bonne compression de l'air contenu dans la chambre de pressurisation correspondante et une bonne réalimentation en air de cette chambre au cours d'un va-et-vient du poussoir par rapport au corps, il est avantageux que la jupe présente une forme sensiblement tronconique et soit solidaire du piston par une première extrémité, tandis que la seconde extrémité de la jupe est libre et coulisse le long de la partie tubulaire correspondante qui présente deux tronçons de guidage disposés bout à bout, et dont l'un a une section transversale plus grande que celle de l'autre, de sorte que l'extrémité libre de la jupe ne coulisse pas avec étanchéité le long de l'un des tronçons, sur une première partie de la course de compression du poussoir, lorsqu'il est enfoncé vers l'intérieur du corps à partir de sa position initiale, alors que l'extrémité libre de la jupe coulisse avec étanchéité le long de l'autre tronçon, sur le reste de la course de compression du poussoir.

Chaque jupe sensiblement tronconique peut être une jupe qui converge vers son extrémité libre et coulisse autour de la partie tubulaire correspondante du corps avec laquelle elle délimite la chambre de pressurisation correspondante. Dans ce cas, cette partie tubulaire doit être conformée en douille interne au corps, et elle peut avantageusement être portée par la cloison interne correspondante en étant adjacente à cette cloison par le tronçon de guidage de plus grande section transversale. L'extrémité libre de la jupe vient alors en contact coulissant et étanche par sa face latérale interne contre la face externe de ce tronçon de plus grande section transversale, le long de la partie correspondante de la course de compression du poussoir. La jupe est dans ce cas guidée à l'extérieur de la douille, sur laquelle le tronçon de plus grande section transversale est délimité entre le tronçon de plus petite section transversale et la cloison interne.

Cependant, afin de faciliter la réalisation des deux tronçons de la partie tubulaire, d'améliorer le guidage de la jupe le long de cette partie tubulaire, et surtout d'améliorer l'étanchéité du contact coulissant de l'extrémité libre de la jupe contre l'un des deux tronçons de cette partie tubulaire, il est avantageux que chaque jupe s'évase vers son extrémité libre et coulisse à l'intérieur de la partie tubulaire correspondante, qui est conformée en douille interne au corps et est portée par la cloison interne correspondante en étant adjacente à cette cloison par le tronçon de guidage de plus petite section transversale, contre la face interne duquel la face latérale externe de l'extrémité libre de la jupe vient en contact coulissant et étanche, sur la partie correspondante de la course de compression du poussoir. Dans ce cas, et selon une forme simple de réalisation, le tronçon de plus grande section transversale est délimité sur chaque douille par au moins une rainure ménagée dans la face interne de la douille correspondante et s'étendant sur une partie seulement de la longueur de la douille.

Avantageusement, chaque jupe est d'une seule pièce avec le piston correspondant, et chaque ressort de rappel prend appui par une extrémité contre la cloison interne correspondante, ce qui permet de diminuer le nombre des pièces nécessaires à la réalisation du stylo doseur sans compliquer sensiblement la réalisation de ces pièces ni leur montage. De plus, dans le cas préféré d'une réalisation dans laquelle chaque jupe est évasée vers son extrémité libre, l'extrémité du ressort de rappel correspondant qui est en appui contre la cloison interne correspondante, peut avantageusement être de plus centrée autour d'un bourrelet qui entoure l'ouverture de pressurisation correspondante, est en saillie vers l'intérieur de la chambre de pressurisation correspondante, et est porté par la cloison interne.

En restant dans le cadre du mode de réalisation préféré dans lequel chaque jupe s'évase vers son extrémité libre, le guidage du piston correspondant, et donc de la jupe, peut encore être amélioré si, avantageusement, le piston comprend un collet latéral entourant la jupe avec espacement et délimitant avec elle une chambre annulaire à fond fermé dans laquelle est guidée et se loge la douille interne correspondante, lorsque le poussoir et le piston tout enfoncés vers l'intérieur du corps, le fond fermé venant en butée contre la douille pour limiter la course de compression du piston, dont le collet latéral est lui-même guidé et logé dans une autre chambre annulaire, délimitée dans le corps autour de la douille interne.

Dans les différentes variantes de réalisation présentées ci-dessus, il est possible que les déplacements du poussoir et/ou de l'obturateur de chaque clapet et/ou de chaque jupe s'effectuent selon une direction transversale par rapport à l'axe du corps tubulaire, et en particulier perpendiculairement à cet axe. Dans ce cas, il est clair que la partie tubulaire du corps qui délimite la ou les chambres de pressurisation avec la ou les jupes correspondantes, comporte également, pour chaque chambre, une douille interne d'axe transversal par rapport à l'axe du corps tubulaire, et avantageusement portée par une cloison interne s'étendant parallèlement à l'axe du corps tubulaire.

Cependant, pour pouvoir choisir la course de compression de chaque piston, et donc le rapport de compression dans la chambre de pressurisation correspondante, ainsi que la pression et le volume de l'air sous pression qui est transféré dans la chambre de produit correspondante, à chaque manœuvre du poussoir, en fonction de la viscosité du produit, sans être limité par les dimensions transversales du corps tubulaire, il est avantageux que la cloison interne correspondante soit transversale et perpendiculaire à l'axe du corps tubulaire, et le poussoir, l'obturateur et la jupe correspondante se déplacent axialement dans le corps. Dans ce cas, selon un mode de réalisation préféré, la jupe, la partie tubulaire du corps, la chambre et l'ouverture de pressurisation correspondants, l'obturateur et le siège du clapet correspondants, ainsi que, le cas échéant, la tige correspondante et/ou le collet latéral du piston correspondant et/ou le bourrelet de la cloison correspondante sont coaxiaux.

Afin d'éviter la formation intempestive de gouttes au niveau des orifices de distribution de tels distributeurs, en raison de certaines conditions d'utilisation et/ou à la suite de certaines manipulations de ces distributeurs, un stabilisateur de pression est avantageusement monté dans chaque nez, pour chaque orifice de distribution, ce stabilisateur de pression comprenant une pièce tubulaire dont un passage interne, destiné à être traversé par une quantité dosée du produit chassé d'une chambre de produit correspondante vers l'orifice de distribution correspondant, est partiellement obturé par une cloison transversale percée d'un orifice de passage de section inférieure à celle de l'orifice de distribution correspondant.

Dans un mode particulier de réalisation, destiné à la distribution d'un seul produit, et dont le corps délimite une seule chambre de produit et se prolonge par un seul nez, dont le bout présente un seul orifice de distribution, il est avantageux que le poussoir constitue simultanément le piston des moyens de pressurisation, afin de simplifier la structure et de réduire encore le nombre des pièces constitutives.

Dans ce dernier cas, le stabilisateur de pression peut être avantageusement tel que sa pièce tubulaire présente deux portées cylindriques de diamètre différent raccordées par un tronçon tronconique, dont la petite base est formée par la cloison transversale à orifice de passage, la portée cylindrique de plus petite section étant emboîtée dans une partie adjacente à la grande base d'une pointe sensiblement tronconique du nez, dont le bout est formé par la partie adjacente à la petite base de cette pointe, et la pièce tubulaire du stabilisateur de pression est retenue en position par encliquetage élastique de sa portée cylindrique de plus grand diamètre dans le nez.

Lorsque le stylo-doseur ne distribue qu'un seul produit, le bouchon destiné à obturer l'orifice de distribution du nez est de préférence formé par le fond d'un capot amovible destiné à recouvrir l'ensemble du nez.

De plus, afin de faciliter l'assemblage du nez sur le corps, ce dernier présente avantageusement, à proximité de sa première extrémité, un redan périphérique en saillie vers l'intérieur, et qui s'encliquette élastiquement dans une gorge périphérique ménagée dans la face externe d'une portée de centrage cylindrique et tubulaire prévue à une extrémité du nez, et par laquelle le nez est emboîté dans la première extrémité du corps tubulaire jusqu'à la venue de ladite première extrémité du corps en butée contre un épaulement périphérique externe du nez.

Enfin, pour empêcher positivement toute fuite du produit par l'orifice de distribution, entre deux utilisations du stylo-doseur, le capot amovible présente avantageusement, sur son fond, un picot en saillie vers l'intérieur du capot et qui pénètre au moins partiellement dans le bout du nez, afin d'obturer l'orifice de distribution de manière étanche, lorsque le capot est engagé et fixé sur le nez par vissage d'un taraudage du capot sur un filetage du nez, jusqu'à la venue en butée du capot contre l'épaulement périphérique externe du nez. Afin de centrer le capot sur le bout du nez et de guider le picot en position d'obturation de l'orifice de distribution, à la fixation du capot sur le nez, le capot porte avantageusement plusieurs ailettes internes et radiales, réparties autour et espacées du picot.

Par ailleurs, et toujours dans le but de simplifier la réalisation, la jupe se rattache au poussoir par un épaulement du poussoir contre lequel l'unique ressort de rappel prend appui et se centre par l'une de ses extrémités, et le bourrelet de centrage de l'autre extrémité du ressort est situé entre l'ouverture de pressurisation et la douille interne.

Afin de faciliter les traitements, par exemple dermatologiques, qui nécessitent l'utilisation simultanée de deux produits différents qui doivent être conservés séparément l'un de l'autre et mélangés extemporanément, l'invention a également pour objet un distributeur double, pour la distribution simultanée et goutte à goutte de ces deux produits, et ce distributeur est tel que le corps tubulaire présente une paroi interne axiale qui délimite dans le corps deux chambres de produit adjacentes, isolées l'une de l'autre, dont chacune est destinée à contenir une charge de l'un des deux produits à distribuer, le corps contenant également deux ensembles de moyens de pressurisation qui sont symétriques par rapport à la paroi interne, le poussoir étant monté sur le corps de manière à repousser simultanément les deux pistons de ces ensembles de moyens de pressurisation à l'encontre d'un ressort de rappel pour chacun des pistons, lorsque le poussoir est enfoncé vers l'intérieur du corps. Ainsi, à chaque poussée sur le poussoir, on provoque la sortie simultanée d'une goutte de chacun des deux produits, de nature et éventuellement de couleur différentes, mais complémentaires pour un traitement donné, et que l'on peut mélanger directement sur la peau.

Afin de limiter l'encombrement transversal d'un tel distributeur, chacun des deux ressorts de rappel est avantageusement logé entre le corps et la partie tubulaire de l'ensemble correspondant des moyens de pressurisation.

Pour permettre à l'utilisateur de comprendre instantanément et avant utilisation qu'un distributeur est du type distribuant deux produits différents, les distributeurs de ce type peuvent être tels que leur corps se prolonge par deux nez, dont chacun présente un seul orifice de distribution, et qui sont solidaires d'un embout commun emboîté dans le corps de sorte que chaque orifice de distribution ne puisse distribuer que le produit chassé de l'une des deux chambres de produit, le bouchon d'obturation de chaque orifice de distribution étant formé par le fond d'une capsule qui se visse sur le bout du nez correspondant.

Mais il reste possible que le corps se prolonge d'un seul nez, qui, dans ce cas, est traversé par deux conduits isolés l'un de l'autre et menant chacun à l'un de deux orifices de distribution adjacents dans le bout du nez sur lequel se visse un seul bouchon d'obturation des deux orifices de distribution, le nez comportant un embout par lequel il est emboîté dans le corps de sorte que chacun des deux conduits du nez ne soit en communication qu'avec l'une des deux chambres de produit délimitées dans le corps.

Pour mieux faire comprendre l'objet de l'invention, on va en décrire maintenant, à titre d'exemples illustratifs, plusieurs modes de réalisation représentés sur les dessins annexés.

Sur ces dessins :

la figure 1 est une vue en coupe axiale d'un exemple de réalisation préféré de stylo-doseur conforme à l'invention, pour la distribution d'un seul produit, et en position de repos,

la figure 2 est une vue partielle, en coupe axiale, limitée à la partie supérieure du stylo-doseur de la figure 1, représenté en position d'utilisation alors que le poussoir est enfoncé,

la figure 3 est une vue schématique en élévation latérale du stylo-doseur des figures 1 et 2,

la figure 4 est une vue partielle en coupe axiale d'une variante du stylo-doseur des figures 1 à 3,

la figure 5 est une vue partielle, en coupe axiale, limitée à la partie inférieure d'une autre variante de stylo-doseur dont le nez est équipé d'un stabilisateur de pression,

la figure 6 est une vue schématique en coupe axiale d'un exemple de réalisation préféré de stylo-doseur conforme à l'invention pour la distribution simultanée de deux produits et équipé de deux nez,

la figure 7 est une vue en coupe transversale selon VII-VII du corps du distributeur de la figure 6, et

la figure 8 est une vue partielle, en coupe axiale, limitée à la partie inférieure d'une variante de stylo-doseur à deux produits équipée d'un seul nez.

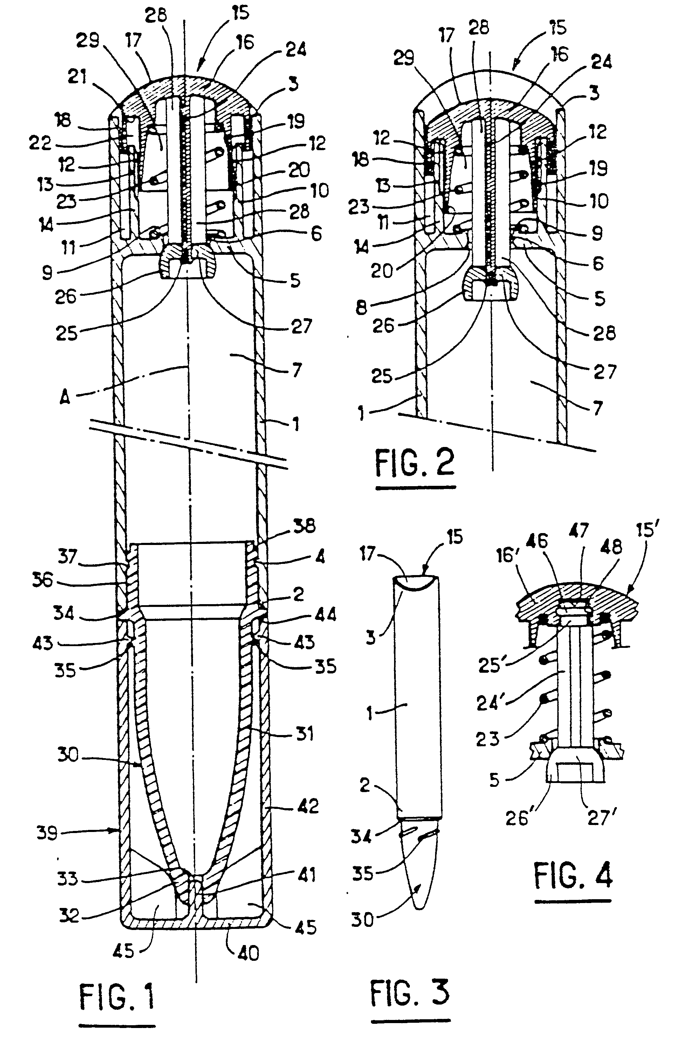

En référence aux figures 1 à 3, le stylo-doseur comprend un corps tubulaire 1, en forme de tronc de cylindre de section circulaire, dont l'extrémité inférieure 2 (en position inférieure sur la figure 1 et qui est dirigée vers le bas en configuration d'utilisation, comme cela est expliqué ci-dessous) délimite une ouverture circulaire dans un plan perpendiculaire à l'axe A du corps 1, tandis que l'extrémité supérieure 3 présente un bord incurvé vers l'extrémité inférieure 2 par deux parties arrondies et sensiblement diamétralement opposées (voir figure 3). A proximité de son extrémité inférieure 2, qui est intérieurement chanfreinée, le corps 1 présente un redan annulaire 4, en saillie vers l'intérieur, et de section trapézoïdale à petite base tournée vers l'intérieur et raccordée à la face interne du corps 1 par deux côtés inclinés. Du côté de son extrémité supérieure 3, le corps 1 présente une cloison interne et transversale 5, perpendiculaire à l'axe A du corps et dans laquelle est ménagée une ouverture centrale 6, de section circulaire et coaxiale au corps 1. Cette ouverture 6 débouche dans la chambre 7, délimitée entre la cloison 5 et l'extrémité inférieure 2, par un évidement tronconique 8 (voir figure 2) divergeant vers la chambre 7. Du côté de l'extrémité supérieure 3, l'ouverture 6 est entourée d'un bourrelet circulaire 9, coaxial au corps 1, porté par la cloison 5 et en saillie vers l'extrémité supérieure 3. A une certaine distance autour du bourrelet 9, la cloison 5 porte également en saillie vers l'extrémité supérieure 3 une douille interne 10, cylindrique de section circulaire, coaxiale au corps 1, et qui ne s'étend pas axialement jusqu'à l'extrémité supérieure 3. Cette douille 10 délimite avec la portion du corps 1 qui l'entoure une chambre annulaire 11 interne au corps 1 et coaxiale à ce dernier. Des rainures axiales 12, ayant toutes une même longueur qui est inférieure à la longueur (ou hauteur) de la douille 10, sont ménagées dans la face interne de cette douille 10, à partir de son extrémité libre (tournée vers l'extrémité supérieure 3) qui est intérieurement chanfreinée, et ces rainures 12 sont régulièrement réparties en direction circonférentielle sur le pourtour de la douille 10. Ces rainures délimitent ainsi sur la douille 10 deux tronçons bout à bout dont l'un 13, correspondant à la partie tubulaire de la douille 10 qui présente les rainures 12, a une section transversale interne qui est supérieure à celle de l'autre tronçon 14, délimitée entre l'extrémité inférieure (en biseau vers la cloison 5) des rainures 12 et la cloison 5.

Le corps 1, avec le redan 4, la cloison interne 5, l'ouverture 6, l'évidement tronconique 8, le bourrelet 9 et la douille interne 10 à rainures 12 est moulé d'une seule pièce en une matière plastique.

Dans l'ouverture délimitée par l'extrémité supérieure 3 du corps 1 est engagé un piston-poussoir 15. Ce poussoir comprend une partie supérieure 16, relativement épaisse et massive, qui ferme, avec un léger jeu radial, l'ouverture supérieure du corps 1, et dont la face supérieure 17 présente la même forme arrondie et incurvée que celle du bord de l'extrémité supérieure 3 du corps 1. Cette partie supérieure 16 se prolonge axialement, à sa périphérie, par un collet latéral annulaire 18 de section circulaire, qui s'étend vers l'intérieur de la chambre annulaire 11. A l'intérieur du collet 18, et avec un espacement radial par rapport à ce collet 18, la partie 16 se prolonge également axialement vers la cloison 5 par une jupe 19 de forme sensiblement tronconique, qui s'évase vers son extrémité inférieure libre 20, et qui s'étend axialement sur une distance supérieure à la dimension axiale du collet 18. Par son extrémité supérieure, plus épaisse que l'extrémité libre 20, la jupe 19 se rattache à la partie massive 16, d'une part, en formant un fond annulaire 21 pour une chambre annulaire 22 délimitée entre cette jupe 19 et le collet 18, et, d'autre part, en formant un épaulement radial vers l'intérieur, sur lequel est centrée et contre lequel prend appui l'extrémité supérieure d'un ressort hélicoïdal 23, dont l'extrémité inférieure prend appui contre la cloison 5 et est centrée autour du bourrelet 9. L'extrémité inférieure libre 20, en forme de tronc de cylindre de section circulaire, de la jupe 19 est élastiquement appliquée, radialement vers l'extérieur, contre la face interne de la douille 10. Ceci est dû au fait que, par construction, le diamètre externe de l'extrémité libre 20 de la jupe 19 est, lorsque le poussoir 15 n'est pas engagé dans le corps 1, légèrement supérieur au diamètre interne de la douille 10. De la sorte, lorsque le poussoir 15 est engagé dans le corps 1, l'extrémité libre 20 de la jupe 19 est légèrement et progressivement déformée élastiquement et resserrée radialement au passage dans l'extrémité supérieure intérieurement chanfreinée de la douille 10, alors que le collet 18 s'engage par son extrémité dans la chambre annulaire 11 avec des jeux radiaux vis-à-vis du corps 1 comme de la douille 10. Enfin, la portion centrale de la partie massive 16 se prolonge axialement vers l'intérieur du corps 1 par une tige centrale et axiale 24, dont la longueur axiale est supérieure à celle de la jupe 19. A son extrémité inférieure libre, cette tige 24 porte une tête élargie 25, de forme extérieure tronconique convergeant du côté opposé au poussoir 15, et axialement fendue, afin que les deux demi-têtes ainsi formées puissent être rapprochées élastiquement l'une contre l'autre puis revenir dans leur position initiale en s'écartant l'une de l'autre. Par la tige 24 et la tête 25 élastiquement déformable, le poussoir 15 est solidarisé à un obturateur de clapet 26 introduit dans la chambre 7 du corps 1. Cet obturateur 26 a extérieurement la forme d'une portion de sphère, et il est partiellement creux et à fond plat 27. Un trou central à entrée chanfreinée est percé dans le fond plat 27, et l'obturateur 26 est monté sur la tige 24 par encliquetage élastique de la tête fendue 25 dans le trou du fond 27. Pour cela, l'obturateur est introduit dans la chambre 7 par l'extrémité inférieure 2 du corps 1 et il est maintenu appliqué par sa surface externe sphérique contre la surface tronconique de l'évidement 8, qui forme un siège de clapet pour cet obturateur 26. Puis, après la mise en place du ressort 23 autour du bourrelet 9, le poussoir 15 est engagé par sa jupe 19 autour du ressort 23, puis engagé par son collet 18 dans l'extrémité supérieure 3 du corps 1 et par sa jupe 19 dans la douille 10, par une poussée axiale exercée sur le poussoir 15 et enfonçant ce dernier vers l'intérieur du corps 1, à l'encontre du ressort 23. La tige 24 et sa tête 25 pénètrent alors dans l'ouverture 6 de la cloison 5, puis la tête 25 s'engage dans le trou du fond 27 de l'obturateur, en étant guidée par l'entrée chanfreinée de ce trou. Les deux moitiés de la tête 25 se resserrent élastiquement l'une contre l'autre au passage de la tête 25 dans le trou, puis, dès que la tête 25 débouche du trou de l'obturateur 26, ses deux moitiés s'écartent élastiquement l'une de l'autre et bloquent l'obturateur 26 de sorte que son fond 27 soit pincé entre la tête 25 et les extrémités inférieures de nervures radiales 28 qui sont raccordées axialement à la tige 24 et par leur extrémité supérieure à la partie 16 du poussoir 15, afin de rigidifier la tige 24. Les nervures 28 ont une dimension radiale telle qu'elles s'étendent librement dans le ressort 23 et qu'elles passent dans l'ouverture 6. Le poussoir 15 avec son collet 18, sa jupe 19, sa tige 24 à tête 25 élastiquement déformable et ses nervures 28 est moulé d'une seule pièce en une matière plastique.

L'obturateur 26 est également moulé en une matière plastique telle qu'un caoutchouc synthétique.

Le ressort 23 repousse le poussoir 15 vers l'extérieur du corps 1, de sorte que l'obturateur 26, immobilisé à l'extrémité de la tige 24, est élastiquement appliqué de manière étanche contre le siège tronconique 8. La dimension axiale de la tige 24 est telle que, dans cette position initiale du poussoir 15, la face supérieure 17 de celui-ci est dans le profil du bord de l'extrémité supérieure 3 du corps 1, et l'extrémité inférieure du collet 18 est légèrement engagée dans la chambre annulaire 11. La dimension axiale de la jupe 19 est telle que son extrémité inférieure libre 20 est alors en contact avec la face interne du tronçon supérieur 13 de la douille 10. La chambre 29, délimitée à l'intérieur de la jupe 19, entre le poussoir 15, la cloison 5 et la douille 10, est alors en communication avec l'atmosphère ambiante par les nervures 12, la chambre annulaire 22, le jeu radial entre le collet 18 et la douille 10, la chambre annulaire 11 et le jeu radial entre le collet 18 et le corps 1, tandis que la communication entre les chambres 7 et 29 par l'ouverture 6 est fermée de manière étanche par l'obturateur 26 appliqué contre son siège 8.

Le sous-ensemble constitué des quatre pièces décrites ci-dessus, à savoir le corps 1, le poussoir 15, l'obturateur 26 et le ressort 23, et assemblé comme on vient de le décrire, reçoit ensuite une charge d'un produit relativement visqueux ou onctueux, tel qu'un lait de toilette, qui est introduit dans la chambre 7 du corps 1 retourné de sorte que son extrémité 2 soit dirigée vers le haut. Puis un nez 30 est fixé sur le corps 1. Le nez 30 comprend une partie principale 31 tubulaire et de forme ogivale, dont le bout resserré 32 présente un orifice de distribution axiale 33 de petit diamètre. A son extrémité opposée au bout 32, la partie principale 31 s'évase et est entourée d'un épaulement radial annulaire 34, en saillie vers l'extérieur. A proximité de cet épaulement 34, la partie principale 31 porte, en saillie également vers l'extérieur, un filetage 35 à deux demi-spires hélicoïdales (voir figure 3), et la partie principale 31 du nez 30 se prolonge enfin, au-delà de l'épaulement 34, par une portée de centrage tubulaire 36, cylindrique et de section circulaire, qui s'emmanche dans l'extrémité 2 du corps 1. Une gorge périphérique 37, dont la section transversale a une forme trapézoïdale correspondant à celle de la section du redan 4 du corps 1, est ménagée dans la face externe de la portée 36, à une distance axiale de l'épaulement 34 qui correspond à la distance axiale séparant le redan 4 de l'extrémité 2 du corps 1. Le nez 30 se fixe ainsi par emboîtement de la portée 36 dans le corps 1, jusqu'à ce que l'épaulement 34 vienne en butée contre l'extrémité 2 du corps 1, et par encliquetage élastique du redan 4 du corps 1 dans la gorge 37 de la portée 36, comme représenté sur la figure 1. Afin de faciliter la pénétration de la portée 36 dans le corps 1 et le passage au-delà du redan 4, l'extrémité libre de la portée 36 est extérieurement chanfreinée en 38. Lorsqu'il est ainsi monté, le nez 30 est coaxial au corps 1, et il en est de même du poussoir 15, de sa jupe 19, de son collet 18 et de sa tige 24, en position initiale, sous l'effet de la poussée du ressort de rappel 23.

Le nez 30 est ensuite recouvert d'un capot amovible 39, ayant la forme d'un tronc de cylindre de section circulaire, de mêmes diamètres interne et externe que le corps 1, et fermé à une extrémité par un fond plat 40. Ce fond plat 40 porte, en saillie vers l'intérieur du capot 39, un picot 41 qui vient obturer de manière étanche l'orifice de distribution 33 du nez 30, lorsque le capot 39 est monté et fixé sur le nez 30 par le vissage de deux demi-spires hélicoïdales 43, en saillie vers l'intérieur sur la paroi latérale 42 du capot, jouant un rôle analogue à un taraudage interne au capot, et qui coopèrent avec le filetage 35 du nez, jusqu'à la venue de l'extrémité libre 44 de cette paroi latérale 42 contre l'épaulement 34 du nez 30, comme représenté sur la figure 1.

Le nez 30 et le capot amovible 39 sont chacun également moulés d'une seule pièce en matière plastique.

Le stylo doseur ainsi réalisé avec six pièces seulement et chargé d'un produit à distribuer s'utilise impérativement dans la position de la figure 1, c'est-à-dire avec le nez 30 dirigé vers le bas. Le capot 39 est enlevé par dévissage, et, bien que le picot 41 soit retiré de l'orifice 33, le produit ne s'écoule pas hors du stylo en raison du faible diamètre de cet orifice 33, de la viscosité du produit et des phénomènes de capillarité.

Pour distribuer une goutte du produit, on appuie ensuite sur le poussoir 15, à partir de sa position initiale représentée sur la figure 1, et à l'encontre du ressort de rappel 23. On obtient ainsi que le collet 18 s'enfonce et est guidé dans la chambre 11, que la jupe 19 coulisse dans la douille 10, et que l'obturateur 26 est écarté de son siège 8 et est repoussé dans la chambre de produit 7, ce qui ouvre la communication entre la chambre 29 et la chambre 7.

Pendant une première partie de la course du poussoir 15 vers l'intérieur du corps 1, jusqu'à ce que l'extrémité libre 20 de la jupe 19 parvienne à l'extrémité inférieure des rainures 12, la chambre 29 diminue de volume sans que la pression dans cette chambre augmente. Puis, en raison du contact étanche de la jupe 19 contre la face interne du tronçon inférieur 14 de la douille 10, la diminution de volume de la chambre 29 s'accompagne d'une pressurisation de l'air qu'elle contient, et cette pression s'exerce dans la chambre 7, sur le produit qui s'y trouve contenu, par l'ouverture 6, du fait de la position ouverte du clapet formé par l'obturateur 26 et son siège 8. La course de compression est limitée par la venue du fond 21 de la chambre 22 en butée contre l'extrémité supérieure de la douille 10, comme représenté sur la figure 2. Sous l'effet de la pression d'air qui s'exerce sur le produit, ce dernier est repoussé vers l'orifice de distribution 33 du nez 30, ce qui a pour conséquence de faire sortir une goutte du produit. En relâchant le poussoir 15, le ressort 23 rappelle ce dernier vers sa position initiale, l'obturateur 26 est refermé de manière étanche sur son siège 8, et dès que l'extrémité libre 20 de la jupe 19 coulisse dans le tronçon supérieur 13 de la douille 10, la communication entre la chambre de pressurisation 29 et l'atmosphère ambiante est rétablie, et la chambre 29, dont le volume augmente à présent, est ainsi réalimentée en air frais, ce qui permet de reconstituer une réserve d'air à l'intérieur de la chambre 29, en vue d'une nouvelle manœuvre du poussoir 15 pour distribuer une autre goutte de produit.

Il est clair que la quantité de produit distribuée à chaque manœuvre du poussoir 15 est déterminée par le dimensionnement du clapet, du poussoir, en particulier de sa jupe, et de la course de compression d'air, et que cette quantité distribuée peut donc être ajustée par un dimensionnement approprié de ces organes et de ce paramètre notamment.

Afin de faciliter l'engagement du picot 41 dans l'orifice de distribution 33, lorsque le capot 39 est fixé sur le nez 30, le capot 39 présente de plus plusieurs ailettes internes de centrage 45, qui sont régulièrement réparties, en direction circonférentielle autour du picot 41. Ces ailettes 45 sont, par exemple, au nombre de quatre disposées à 90° les unes des autres. Chacune d'elles s'étend dans un plan radial et est solidaire à la fois du fond plat 40 et de la face interne de la paroi latérale 42 du capot 39, et chaque ailette 45, dont le bord interne libre présente une partie arrondie délimitant avec les bords internes libres des autres ailettes un col convergent de centrage du capot 39 sur le bout 32 du nez 30, se raccorde au fond plat 40 à une certaine distance radiale du picot 41 qui correspond à l'épaisseur du nez 32 autour du picot 41.

La variante de réalisation qui est partiellement représentée sur la figure 4 ne se distingue de la réalisation des figures 1 à 3, que par la liaison de l'obturateur de clapet 26′ au poussoir 15′. En effet dans cette variante, la tige centrale et axiale 24′, de section transversale cruciforme, est d'une seule pièce avec l'obturateur 26′ en étant solidaire par son extrémité inférieure du fond plat 27′ de l'obturateur 26′, qui est par ailleurs identique dans sa structure et son fonctionnement à l'obturateur 26 de l'exemple des figures 1 à 3. La partie d'extrémité libre ou supérieure 25′ de la tige 24′ est conformée en tronc de cylindre de section circulaire entouré d'un bourrelet annulaire périphérique 46. Le poussoir 15′ présente, dans sa partie supérieure relativement épaisse et massive 16′, un évidement central 47 de forme cylindrique complémentaire de celle de la partie d'extrémité supérieure 25′ de la tige 24′, et qui s'ouvre vers la cloison interne 5. Une gorge circulaire 48, de forme complémentaire à celle du bourrelet 46, est ménagée dans la paroi latérale de l'évidement 47. L'obturateur 26′ est solidarisé au poussoir 15′ par engagement de la partie d'extrémité supérieure 25′ de la tige 24′ dans l'évidement 47, et par encliquetage élastique du bourrelet 46 dans la gorge 48. Pour le reste, la structure du poussoir 15′ et sa coopération avec les autres éléments du stylo-doseur sont identiques ou directement équivalentes à celles du poussoir 15 de l'exemple des figures 1 à 3, mais l'avantage de la variante de la figure 4 par rapport à l'exemple des figures 1 à 3 est que l'assemblage des pièces de la partie supérieure du stylo-doseur est facilité.

Le stylo-doseur selon l'invention, qui, dans les deux variantes décrites, n'est constitué que de six pièces de forme relativement simple, peu coûteuses à fabriquer et faciles à assembler, procure ainsi les mêmes résultats que les dispositifs bien plus complexes et coûteux de l'état de la technique.

Cependant, dans certaines conditions d'utilisation et à la suite de certaines manipulations, il peut se poser un problème d'égoutture avec ces variantes de stylo-doseur.

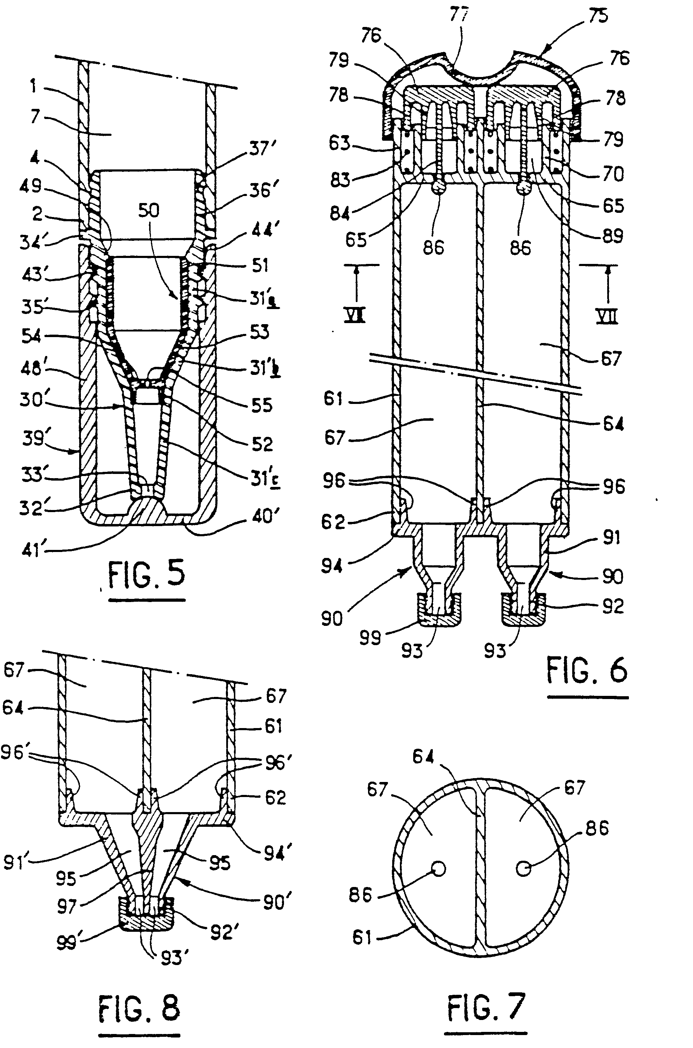

En effet, lorsque le capot 39 est retiré du nez 30 et que le stylo-doseur est incliné de sorte que le poussoir 15 ou 15′ soit en position basse, de l'air pénètre dans le nez 30 par l'orifice de distribution 33. Lorsque le stylo-doseur est ensuite remis en position d'utilisation (nez 30 dirigé vers le bas), on obtient une goutte d'un mélange air/ produit à la première sollicitation du poussoir 15 ou 15′. Puis, sans que le poussoir soit à nouveau sollicité, on constate la formation intempestive d'une goutte de produit à la sortie de l'orifice de distribution 33. Pour remédier à cet inconvénient, un septième élément, également moulé d'une seule pièce en matière plastique, et appelé « stabilisateur de pression », est monté dans le nez du stylo-doseur, comme dans la variante représentée sur la figure 5.

Cette variante ne se distingue essentiellement des réalisations décrites en référence aux figures 1 à 4 que par la structure et la forme du nez 30′, par la présence du stabilisateur de pression dans ce nez 30′ et par la forme du picot 41′ d'obturation de l'orifice de distribution 33′ du nez 30′. Comme dans l'exemple précédent, le nez 30′ comporte, à son extrémité supérieure, une portée de centrage tubulaire 36′ à gorge interne 37′, par laquelle le nez 30′ est emmanché dans l'extrémité inférieure 2 du corps tubulaire 1, jusqu'à obtenir l'encliquetage élastique du redan annulaire 4 du corps 1 dans la gorge 37′, et la venue en butée de l'épaulement annulaire et radial externe 34′ du nez 30′ contre l'extrémité 2 du corps 1. Par contre, la partie principale tubulaire du nez 30′ n'est pas de forme ogivale, comme dans l'exemple précédent, mais en forme de double tronc de cône. Cette partie, principale est subdivisée en trois tronçons coaxiaux et bout à bout, dont l'un 31′a, adjacent à la portée 36′, est un tronçon cylindrique portant le filetage externe 35′ et une nervure annulaire 49, de section transversale triangulaire et en saillie vers l'intérieur, à son extrémité raccordée à la portée 36′. Le second tronçon 31′b est tronconique et converge du premier tronçon 31′a vers le troisième 31′c, en forme de pointe tronconique dont l'angle d'ouverture est nettement inférieur à celui du second tronçon 31′b, et dont la petite base correspond au bout 32′ du nez 30′, percé de l'orifice de distribution 33′ et présentant un évidement coaxial en forme de calotte sphérique à concavité tournée vers l'extérieur. Dans cet évidement vient se loger le picot 41′, en forme de demi-sphère de rayon correspondant, et en saillie vers l'intérieur du capot 39′ sur le fond 40′ de ce dernier, lorsque le capot 39′ est engagé sur le nez 30′ et fixé à ce dernier par vissage des filets 43′ de son taraudage interne sur le filetage 35′ du nez 30′, la forme sphérique du picot 41′ et de l'évidement du bout 32′ permettant, par rotulage, le centrage du picot dans l'évidement pour obturer de manière étanche l'orifice 33′, au montage du capot 39′ sur le nez 30′, sans qu'il soit nécessaire de prévoir des ailettes internes de centrage. Le stabilisateur de pression 50, logé dans le nez 30′, est une pièce tubulaire, traversée par une dose de produit chassée de la chambre de produit du corps lorsque le poussoir correspondant est actionné, et cette pièce tubulaire est constituée de deux portées cylindriques coaxiales 51 et 52, de diamètre différent, reliées par un tronçon tronconique coaxial 53. Au niveau de la petite base du tronçon 53, cette pièce présente une cloison transversale 54 percée d'un orifice de passage central 55, de section nettement inférieure à celle de l'orifice de distribution 33′ en regard sur le bout du nez 30′. Le stabilisateur de pression 50 est positionné dans le nez 30′ de sorte que sa portée 52 de plus petit diamètre soit emmanchée dans la partie adjacente à la grande base de la pointe tronconique 31′c, le tronçon tronconique 53 étant centré dans le tronçon tronconique 31′b, et la portée 51 de plus grand diamètre étant engagée dans le tronçon cylindrique 31'a, le stabilisateur 50 étant retenu dans cette position par encliquetage élastique de la nervure interne 49 du nez 30' derrière l'extrémité libre de la portée 51.

Avec un tel distributeur, dés la première utilisation et au relâchement du poussoir, il se produit une aspiration vers la chambre de produit 7 dans le corps 1 de la presque totalité du produit qui restait dans la pointe 31'c, entre l'orifice 33' et la cloison 54 du stabilisateur 50, ce qui empêche la formation intempestive de gouttes. De plus, on note que la forme intérieure de la pointe tronconique 31'c favorise la retenue du produit qui resterait éventuellement dans cette pointe 31'c.

Si le diamètre de l'orifice de distribution 33' du nez 30' est par exemple de 2,5 mm, on obtient un excellent fonctionnement du stabilisateur 50 si le diamètre de l'orifice de passage 55 est de 0,7 mm.

Le stylo-doseur double ou bidistributeur représenté schématiquement sur la figure 6 est destiné à distribuer simultanément et goutte à goutte deux produits différents à mélanger au moment de l'application. Ce distributeur comprend un corps tubulaire cylindrique 61, dont le volume interne est subdivisé, par une paroi interne axiale 64, s'étendant selon un plan diamétral (voir figure 7), en deux chambres semi-cylindriques égales 67, destinées chacune à contenir une charge de l'un des deux produits à distribuer. A l'intérieur de sa partie supérieure 63, ce corps 61 loge deux mécanismes identiques montés symétriquement de part et d'autre de la paroi 64, et dont chacun est fonctionnellement équivalent et structurellement très semblable au mécanisme de pressurisation qui est monté dans la partie supérieure du corps 1 du stylo-doseur représenté sur la figure 1. Sur le plan de la structure, la principale différence entre chacun de ces deux mécanismes de pressurisation et celui du distributeur de la figure 1 est que la tige 84, portant l'obturateur mobile 86 du clapet, la jupe mobile 79 et le collet latéral 78 sont solidaires d'un piston 76 qui n'est pas intégré au poussoir 75, comme dans les exemples précédents, mais distinct de ce poussoir 75.

Le poussoir 75 est élastiquement encliqueté par son bord, en forme de collerette périphérique, autour de l'extrémité supérieure 63 du corps 61, et sa partie centrale 77, bombée vers l'intérieur du corps 61, est élastiquement déformable et en contact avec la face supérieure des deux pistons 76. Ceux-ci sont repoussés en position initiale, en saillie au-dessus de l'extrémité supérieure 63 du corps 61 et de la paroi interne 64 par deux ressorts de rappel 83, dont chacun est logé dans la chambre annulaire délimitée dans le mécanisme de pressurisation correspondant, entre la partie supérieure et adjacente 63 du corps 61 et la douille tubulaire 70, qui est portée par la cloison interne transversale 65 s'étendant entre la paroi axiale 64 et la paroi latérale du corps 61, et qui coopère avec la jupe mobile 79 pour pressuriser de l'air dans la chambre de pressurisation 89. Cet air est mis sous pression dans les deux chambres 89 par l'enfoncement de la partie centrale 77 du poussoir 75 vers l'intérieur du corps 61, ce qui commande un déplacement axial simultané des deux pistons 76 vers les cloisons 65, à l'encontre des ressorts 83, et la coopération de chaque jupe 79 avec la douille 70 correspondante, comme cela est le cas dans l'exemple de la figure 1 pour la jupe 19 et la douille 10. L'air pressurisé dans chaque chambre 89 passe dans la chambre de produit 67 correspondante du fait que l'obturateur 86 est écarté de son siège, autour d'une ouverture de pressurisation correspondante ménagée dans la cloison 65, à la suite de l'enfoncement des pistons 76 par le poussoir 75. Ce distributeur comprend ainsi deux mécanismes identiques, juxtaposés, et simultanément actionnés par un unique poussoir 75, et chacun de ces deux mécanismes fonctionne comme le mécanisme de pressurisation à la partie supérieure du distributeur de la figure 1. Le distributeur double de la figure 6 comporte deux nez 90 identiques, dont chacun est en communication avec une seule des chambres de produit 67. Chaque nez 90 comporte une partie principale 91 cylindrique qui se resserre par un tronçon tronconique jusqu'à son bout cylindrique 92, entourant l'orifice de distribution 93 et extérieurement fileté, et cet orifice 93 est obturé par vissage sur le bout 92 d'une capsule 99 de bouchage. La vue des deux capsules 99 et des deux nez 90 permet à l'utilisateur de comprendre immédiatement que ce distributeur est conçu pour deux produits. Les deux nez 90 sont moulés d'une seule pièce en matière plastique sous la forme d'un embout qui présente un épaulement radial externe 94 de butée contre l'extrémité inférieure 62 du corps 61, et deux lèvres axiales 96 qui s'emboîtent dans l'extrémité inférieure 62 du corps 61 en pinçant entre elle l'extrémité inférieure de la paroi 64.

Sur un tel distributeur, la partie centrale bombée 77 du poussoir 75 facilite le positionnement d'un doigt de l'utilisateur pour appuyer sur le poussoir 75 et enfoncer simultanément les deux pistons 76, afin de provoquer la sortie simultanée par les nez 90 d'une goutte de chacun des deux produits.

Sur la figure 8, on a représenté la partie inférieure d'une variante de distributeur de deux produits, dont le corps 61 et les mécanismes de pressurisation de la partie supérieure sont identiques aux organes correspondants de l'exemple de la figure 6. La différence principale est que le distributeur de la figure 8 comporte un seul nez 90'.

Celui-ci est monté sur le corps 61 comme dans l'exemple précédent, par emboîtement de deux lèvres 96' du nez 90' dans l'extrémité inférieure 62 du corps et par pincement de la paroi 64 entre ces lèvres 96', l'épaulement externe périphérique 94' du nez 90' venant en butée contre l'extrémité inférieure 62 du corps 61. Ce nez 90' comporte une partie centrale 91' tronconique, convergeant vers le bout 92' du nez, et dont le volume interne est subdivisé en deux conduits indépendants 95 par une paroi médiane 97 s'étendant d'une extrémité à l'autre du nez 90', de sorte que chacun des deux conduits 95 présente une section décroissante de son entrée, en communication avec une chambre de produit 67 correspondante, à sa sortie formant l'un des deux orifices de distribution 93' adjacents dans le bout 92' du nez. Les deux orifices de distribution 93' peuvent être simultanément bouchés par une unique capsule 99' qui se visse sur un filetage extérieur du bout 92'.

Cette réalisation a pour avantage que les gouttes des deux produits qui sont distribuées simultanément, sont immédiatement adjacentes, ce qui facilite leur mélange immédiatement après l'application.

Bien entendu, il est indiqué, bien que cela n'ait pas été représenté sur les figures, de monter un stabilisateur de pression, analogue au stabilisateur 50 de la figure 5, dans chacun des nez du distributeur de la figure 6 ainsi que dans chacun des conduits 95 du nez 90' du distributeur de la figure 8.

Sous réserve que l'encombrement transversal du distributeur reste acceptable, on peut envisager de monter côte-à-côte dans un même corps trois ou même quatre mécanismes de pressurisation analogues à celui de la figure 1, dont chacun est associé à une chambre de produit délimitée dans le corps et qui communique avec un orifice de distribution au bout d'un nez.

Il est bien entendu que les dispositifs ci-dessus décrits pourront donner lieu à toute modification désirable sans sortir du cadre de l'invention.

## Revendications

1. Dispositif de distribution en quantités dosées d'au moins un produit relativement visqueux, en particulier un produit cosmétique, comprenant un corps tubulaire (1), qui délimite au moins une chambre de produit (7) destinée à contenir une charge d'un produit à distribuer et qui se prolonge, à une première extrémité (2), par au moins un nez (30) dont le bout (32) présente au moins un orifice de distribution (33) de petit diamètre, susceptible d'être obturé de manière étanche par la fixation d'un bouchon amovible (39) sur ledit nez (30) correspondant, le corps (1) contenant également des moyens de pressurisation qui sont actionnés par un poussoir (15) accessible de l'extérieur du corps (1) et qui sont destinés à faire pénétrer un volume d'air sous pression dans chaque chambre de produit (7), afin de chasser une quantité dosée du produit correspondant par un orifice de distribution (33) correspondant d'un nez (30), lorsque le bouchon (39) est retiré et que le poussoir (15) est enfoncé vers l'intérieur du corps (1), à partir d'une position initiale et à l'encontre d'au moins un ressort de rappel (23), chaque ressort de rappel (23) tendant à repousser le poussoir (15) vers l'extérieur du corps, dans sa position initiale, et à permettre aux moyens de pressurisation d'assurer une fermeture étanche de chaque chambre de produit (7) du côté de la seconde extrémité (3) du corps (1), caractérisé par le fait que, pour chaque produit, les moyens de pressurisation forment un ensemble comprenant, d'une part, un clapet, dont l'obturateur mobile (26) est lié à un piston accompagnant le poussoir (15) dans ses déplacements et se trouve appliqué de manière étanche contre un siège de clapet (8), entourant une ouverture de pressurisation (6) ménagée dans une cloison interne (5) du corps (1), lorsque le poussoir (15) est repoussé dans sa position initiale, ledit obturateur de clapet (26) étant écarté de son siège (8) lorsque le poussoir (15) est enfoncé vers l'intérieur du corps (1), et, d'autre part, une jupe mobile (19) liée au piston accompagnant le poussoir (15) dans ses déplacements et délimitant avec une partie tubulaire (10) du corps (1) une chambre de pressurisation (29) à volume variable, chaque chambre de pressurisation (29) étant d'un volume maximal et en communication avec l'atmosphère ambiante, lorsque le poussoir (15) occupe sa position initiale, et chaque chambre de pressurisation (29) diminuant de volume et étant isolée de l'atmosphère ambiante par la venue en contact coulissant et étanche de la jupe (19) correspondante contre la partie tubulaire (10) correspondante du corps (1), lorsque le poussoir (15) est enfoncé vers l'intérieur du corps (1), de façon que l'air comprimé dans chaque chambre de pressurisation (29) s'écoule dans la chambre de produit (7) correspondante en passant par l'ouverture de pressurisation (6) correspondante.

2. Dispositif de distribution selon la revendication 1, caractérisé par le fait que, pour chaque ensemble de moyens de pressurisation, l'obturateur (26) correspondant est solidarisé avec le piston correspondant par l'intermédiaire d'une tige (24) s'étendant à l'intérieur du corps (1).

3. Dispositif de distribution selon la revendication 2, caractérisé par le fait que la solidarisation de chaque obturateur (26) avec le piston correspondant est assurée par encliquetage élastique.

4. Dispositif de distribution selon la revendication 3, caractérisé par le fait que chaque tige (24) est d'une seule pièce avec le piston correspondant et porte à son extrémité libre, une tête (25) élargie et élastiquement déformable qui vient s'encliqueter élastiquement dans un trou ménagé dans l'obturateur (26) correspondant.

5. Dispositif de distribution selon la revendication 3, caractérisé par le fait que chaque tige (24') est d'une seule pièce avec l'obturateur (26') correspondant et est entourée, dans sa partie d'extrémité libre (25'), d'au moins un bourrelet périphérique (46) par lequel la tige (24') est élastiquement encliquetée dans une gorge (48) correspondante, formée dans la paroi latérale d'un évidement (47) qui est ménagé dans le piston correspondant et dans lequel la partie d'extrémité libre (25') de la tige (24') est engagée.

6. Dispositif de distribution selon l'une des revendications 1 à 5, caractérisé par le fait que chaque jupe (19) présente une forme sensiblement tronconique et est solidaire du piston correspondant par une première extrémité, tandis que la seconde extrémité (20) de la jupe est libre et coulisse le long de la partie tubulaire (10) correspondante, qui présente deux tronçons de guidage (13, 14) disposés bout à bout, et dont l'un (13) a une section transversale plus grande que celle de l'autre (14), de sorte que l'extrémité libre (20) de la jupe (19) ne coulisse pas avec étanchéité le long de l'un (13) des tronçons, sur une première partie de la course de compression du poussoir (15), lorsqu'il est enfoncé vers l'intérieur du corps (1) à partir de sa position initiale, alors que l'extrémité libre (20) de la jupe (19) coulisse avec étanchéité le long de l'autre tronçon (14), sur le reste de la course de compression du poussoir (15).

7. Dispositif de distribution selon la revendication 6, caractérisé par le fait que chaque jupe (19) est d'une seule pièce avec le piston correspondant.

8. Dispositif de distribution selon l'une des revendications 6 ou 7, caractérisé par le fait que chaque jupe (19) s'évase vers son extrémité libre (20) et coulisse à l'intérieur de la partie tubulaire (10) correspondante qui constitue une douille à l'intérieur du corps (1), ladite douille étant portée par la cloison interne (5) correspondante et étant adjacente à cette cloison par le tronçon de guidage (14) de plus petite section transversale.

9. Dispositif de distribution selon la revendication 8, caractérisé par le fait que le tronçon (13) de plus grande section transversale est délimité sur chaque douille (10) par au moins une rainure (12) ménagée dans la face interne de la douille (10) correspondante et s'étendant sur une partie seulement de la longueur de ladite douille.

10. Dispositif de distribution selon l'une des revendications 8 ou 9, caractérisé par le fait que chaque ressort de rappel (23) prend appui par l'une de ses extrémités contre la cloison interne (5) correspondante et est centré, à cette extrémité, autour d'un bourrelet (9) entourant l'ouverture de pressurisation (6) correspondante, ledit bourrelet (9) étant en saillie vers l'intérieur de la chambre de pressurisation (29) correspondante et étant porté par la cloison interne (5) correspondante.

11. Dispositif de distribution selon l'une des revendications 8 à 10, caractérisé par le fait que chaque piston comprend un collet latéral (18) entourant la jupe (19) avec espacement et délimitant avec elle une chambre annulaire (22) à fond fermé (21) dans laquelle est guidée et se loge la douille interne (10) correspondante lorsque le poussoir (15) et le piston sont enfoncés vers l'intérieur du corps (1), le fond fermé (21) venant en butée contre la douille (10) correspondante pour limiter la course de compression du piston dont le collet latéral (18) est lui-même guidé et logé dans une autre chambre annulaire (11) délimitée dans le corps (1) autour de la douille interne (10) correspondante.

12. Dispositif de distribution selon l'une des revendications 1 à 11, caractérisé par le fait que chaque cloison interne (5) est sensiblement perpendiculaire à l'axe (A) du corps tubulaire (1), et, pour chaque ensemble de moyens de pressurisation, le piston, l'obturateur (26) et la jupe (19) correspondants se déplacent axialement dans le corps (1), et qu'en outre la jupe (19) et l'ouverture (6) de pressurisation correspondantes, l'obturateur (26) et le siège (8) du clapet correspondant, ainsi que, le cas échéant, la tige (24) correspondante et/ou ledit collet latéral (18) du piston correspondant et/ou ledit bourrelet (9) de la cloison (5) correspondante sont coaxiaux.

13. Dispositif de distribution selon l'une des revendications 1 à 12, caractérisé par le fait qu'un stabilisateur de pression (50) est monté dans chaque nez (30'), pour chaque orifice de distribution (33'), ledit stabilisateur de pression (50) comprenant une pièce tubulaire dont un passage interne, destiné à être traversé par une quantité dosée du produit chassé d'une chambre de produit (7) correspondante vers l'orifice de distribution (33') correspondant, est partiellement obturé par une cloison transversale (54) percée d'un orifice de passage (55) de section inférieure à celle de l'orifice de distribution (33') correspondant.

14. Dispositif de distribution selon l'une des revendications 1 à 13, pour la distribution d'un seul produit, et dont le corps (1) délimite une seule chambre de produit (7) et se prolonge par un seul nez (30) dont le bout (32) présente un seul orifice de distribution (33), caractérisé par le fait que le poussoir (15) constitue simultanément le piston des moyens de pressurisation.

15. Dispositif de distribution selon la revendication 14, telle que rattachée à la revendication 13, caractérisé par le fait que la pièce tubulaire du stabilisateur de pression (50) présente deux portées cylindriques (51, 52) de diamètre différent, raccordées par un tronçon tronconique (53), dont la petite base est formée par la cloison transversale (54) à orifice de passage (55), la portée cylindrique de plus petit diamètre (52) étant emboîtée dans une partie adjacente à la grande base d'une pointe sensiblement tronconique (31'c) du nez (30') dont le bout (32') est formé par la partie adjacente à la petite base de ladite pointe (31'c), et ladite pièce tubulaire du stabilisateur de pression (50) étant retenue en position par encliquetage élastique (49) de sa portée cylindrique de plus grand diamètre (51) dans le nez (30').

16. Dispositif de distribution selon l'une des revendications 14 ou 15, caractérisé par le fait que le bouchon destiné à obturer l'orifice de distribution (33) du nez (30) est formé par le fond (40) d'un capot amovible (39) destiné à recouvrir l'ensemble du nez (30).

17. Dispositif de distribution selon l'une des revendications 14 à 16, caractérisé par le fait que le corps tubulaire (1) présente, à proximité de sa première extrémité (2), un redan périphérique (4) en saillie vers l'intérieur, qui s'encliquette élastiquement dans une gorge périphérique (37) ménagée dans la face externe d'une portée de centrage (36) cylindrique et tubulaire prévue à une extrémité du nez (30), le nez étant emboîté dans la première extrémité (2) du corps tubulaire (1) par ladite portée de centrage (36), la première extrémité (2) du corps (1) étant en butée contre un épaulement périphérique (34) externe du nez (30).

18. Dispositif de distribution selon la revendication 17, caractérisé par le fait que le capot amovible (39) présente, sur son fond (40), un picot (41), en saillie vers l'intérieur du capot, picot qui pénètre au moins partiellement dans le bout (32) du nez (30), afin d'obturer l'orifice de distribution (33) de manière étanche, lorsque le capot (39) est engagé et fixé sur le nez (30) par vissage du capot sur le nez, jusqu'à la venue en butée du capot (39) contre l'épaulement périphérique externe (34) du nez (30).

19. Dispositif de distribution selon la revendication 18, caractérisé par le fait que le capot (39) porte plusieurs ailettes (45) internes et radiales, réparties autour et espacées du picot (41), afin de centrer le capot (39) sur le bout (32) du nez (30) et de guider le picot (41) en position d'obturation de l'orifice de distribution (33) à la fixation du capot (39) sur le nez (30).

20. Dispositif de distribution selon l'une des revendications 14 à 19, telle que rattachée à la revendication 7, caractérisé par le fait que la jupe (19) se rattache au poussoir (15) par un épaulement du poussoir contre lequel l'unique ressort de rappel (23) prend appui et se centre par l'une de ses extrémités.

21. Dispositif de distribution selon l'une des revendications 14 à 20, telle que rattachée à la revendication 10, caractérisé par le fait que le bourrelet (9) de centrage de l'extrémité par laquelle l'unique ressort de rappel (23) est en appui contre la cloison interne (5) est situé entre l'ouverture de pressurisation (6) et la douille interne (10).

22. Dispositif de distribution selon l'une des revendications 1 à 13, pour la distribution simultanée de deux produits, caractérisé par le fait que le corps tubulaire (61) présente une paroi interne et axiale (64) qui délimite dans le corps deux chambres de produit (67) adjacentes, isolées l'une de l'autre, dont chacune est destinée à contenir une charge de l'un des deux produits à distribuer, le corps (61) contenant également deux ensembles de moyens de pressurisation (65, 76, 78, 79, 70, 83, 84, 86, 89) qui sont symétriques par rapport à ladite paroi interne (64), le poussoir (75) étant monté sur le corps de manière à repousser simultanément les deux pistons (76) de ces ensembles de moyens de pressurisation à l'encontre d'un ressort de rappel (83) pour chacun des pistons (76) lorsque le poussoir (75) est enfoncé vers l'intérieur du corps (61).

23. Dispositif de distribution selon la revendication 22, caractérisé par le fait que chacun des deux ressorts de rappel (83) est logé entre le corps (61) et la partie tubulaire (70) de l'ensemble correspondant des moyens de pressurisation.

24. Dispositif de distribution selon l'une des revendications 22 ou 23, caractérisé par le fait que le corps (61) se prolonge par deux nez (90) dont chacun présente un seul orifice de distribution (93), et qui sont solidaires d'un embout commun emboîté (96) dans le corps (61) de sorte que chaque orifice de distribution (93) ne puisse distribuer que le produit chassé de l'une des deux chambres de produit (67), le bouchon d'obturation de chaque orifice de distribution (93) étant formé par le fond d'une capsule (99) qui se visse sur le bout (92) du nez (90) correspondant.

25. Dispositif de distribution selon l'une des revendications 22 ou 23, caractérisé par le fait que le corps (61) se prolonge par un seul nez (90') traversé par deux conduits (95) isolés l'un de l'autre et menant chacun à l'un de deux orifices de distribution (93') adjacents dans le bout (92') du nez (90') sur lequel se visse un seul bouchon d'obturation (99') des deux orifices de distribution (93'), le nez comportant un embout par lequel il est emboîté (96') dans le corps (61) de sorte que chacun des deux conduits (95) du nez ne soit en communication qu'avec l'une des deux chambres de produit (67) délimitées dans le corps (61).

## Claims

1. A device for dispensing at least one relatively viscous product, in particular, a cosmetic product, comprising a tubular barrel (1) which delimits at least one product chamber (7) intended to contain a charge of a product to be dispensed and which is extended at a first end (2) in at least one nose (30) whose end (32) has at least one dispensing orifice (33) with a small diameter, capable of being obturated in a leakproof manner by fixing a detachable stopper (39) on the said corresponding nose (30), the barrel (1) also containing pressurisation means which are actuated by a plunger (15) accessible from outside the barrel (1) and which are intended to cause a quantity of pressurised air to penetrate into each product chamber (7) so as to eject a dosed quantity of the corresponding product through the corresponding dispensing orifice (33) of a nose (30) when the stopper (39) is removed and the plunger (15) is depressed towards the interior of the barrel (1) from an initial position and against at least one restoring spring (23), each restoring spring (23) tending to push back the plunger (15) towards the outside of the barrel into its initial position and to allow the pressurisation means to obtain a leakproof seal of each product chamber (7) on the side of the second end (3) of the barrel (1), characterized in that for each product, the pressurisation means form an assembly comprising, on the one hand, a valve whose movable obturator (26) is connected to a piston accompanying the plunger (15) in its displacements and is applied in a leakproof manner against a valve seat (8) surrounding a pressurisation orifice arranged in an internal partition (5) of the barrel (1) when the plunger (15) is pushed back into its initial position, the said valve obturator (26) being separated from its seat (8) when the plunger (15) is depressed towards the interior of the barrel (1) and, on the other hand, a movable skirt (19) connected to the piston accompanying the plunger (15) in its displacements and delimiting, together with a tubular portion (10) of the barrel (1), a variable volume pressurisation chamber (29), each pressurisation chamber (29) having its maximum volume and communicating with the ambient atmosphere when the plunger (15) occupies its initial position and each pressurisation chamber (29) decreasing in volume and being isolated from the ambient atmosphere by the corresponding skirt (19) coming into a sliding and leakproof contact with the corresponding tubular portion (10) of the barrel (1) when the plunger (15) is depressed towards the interior of the barrel (1), so that the air compressed in each pressurisation chamber (29) flows into the corresponding product chamber (7) by passing through the corresponding pressurisation orifice (6).

2. A dispensing device according to claim 1, characterized in that, for each set of the pressurisation means, the corresponding obturator (26) is fixedly connected to the corresponding piston by means of a stem (24) extending inside the barrel (1).

3. A dispensing device according to claim 1, characterized in that the fixing of each obturator (26) to the corresponding piston is ensured by elastic catch engagement.

4. A dispensing device according to claim 3, characterized in that each stem (24) is integral with the corresponding piston and carries at its free end an enlarged and elastically deformable head (25) which comes to be elastically catch engaged in a hole arranged in the corresponding obturator (26).

5. A dispensing device according to claim 3, characterized in that each stem (24') is integral with the corresponding obturator (26') and is surrounded at its free end portion (25') by at least one peripheral bead (46) wherewith the stem (24') is elastically catch engaged in a corresponding groove (48) formed in the lateral wall of a recess (47) arranged in the corresponding piston and wherein the free end portion (25') of the stem (24') is engaged.

6. A dispensing device according to one of claims 1 to 5, characterized in that each skirt (19) has a substantially frustoconical shape and is fixed to the corresponding piston at a first end, while the second end (20) of the skirt is free and slides along the corresponding tubular portion (10) which has two guide portions (13, 14) disposed end to end, and whereof one (13) has a larger cross section than that of the other (14), so that the free end (20) of the skirt does not slide in a leakproof manner along one, (13), of the portions over a first part of the compression stroke of the plunger (15), when it is being depressed towards the interior of the barrel (1) from its initial position whilst the free end (20) of the skirt (19) slides in a leakproof manner along the other portion (14) over the rest of the compression stroke of the plunger (15).

7. A dispensing device according to claim 6, characterized in that each skirt (19) is integral with the corresponding piston.

8. A dispensing device according to one of claims 6 or 7, characterized in that each skirt (19) flares towards its free end (20) and slides inside the corresponding tubular portion (10) which constitutes a socket inside the barrel (1), the said socket being carried by the corresponding internal partition (5) and being adjacent to this partition via the guide portion (14) with the smaller cross section.

9. A dispensing device according to claim 8 characterized in that the section (13) with the larger transverse cross section is delimited on each socket (10) by at least one groove (12) arranged in the internal face of the corresponding socket (10) and extending over only a portion of the length of the said socket.

10. A dispensing device according to one of claims 8 or 9, characterized in that each restoring spring (23) bears with one of its ends against the corresponding internal partition (5) and is centred at this end around a bead (9) surrounding the corresponding pressurisation orifice (6), the said bead (9) projecting towards the interior of the corresponding pressurisation chamber (29) and being carried by the corresponding internal partition (5).

11. A dispensing device according to one of claims 8 to 10, characterized in that each piston comprises a lateral collar (18) surrounding the skirt (19) with a gap and delimiting therewith an annular chamber (22) with a closed end (21), wherein the corresponding internal socket (10) is guided and accommodated when the plunger (15) and the piston are depressed towards the interior of the barrel (1), the closed end (21) coming to bear against the corresponding socket (10) to limit the compression stroke of the piston whose lateral collar (18) is itself guided and accommodated in another annular chamber (11) delimited in the barrel (1) around the corresponding internal socket (10).

12. A dispensing device according to one of claims 1 to 11, characterized in that each internal partition (5) is substantially perpendicular to the axis (A) of the tubular barrel (1), and, for each set of pressurisation means, the corresponding piston, obturator (26) and skirt (19) are axially displaced in the barrel (1) and in that moreover, the corresponding skirt (19) and pressurisation orifice (6), the obturator (26) and the corresponding valve seat (8) and, if applicable, the corresponding stem (24) and/or the said lateral collar (18) of the corresponding piston and/or the said bead (9) of the corresponding partition (5) are coaxial.

13. A dispensing device according to one of claims 1 to 12, characterized in that a pressure stabiliser (50) is mounted in each nose (30') for each dispensing orifice (33'), the said pressure stabiliser (50) comprising a tubular part whereof an internal duct intended to be traversed by a dosed quantity of the product ejected from a corresponding product chamber (7) towards the corresponding dispensing orifice (33') is partly obturated by a transverse partition (54) pierced by a passage opening (55) with a smaller cross section than that of the corresponding dispensing orifice (33').

14. A dispensing device according to one of claims 1 to 13 for the dispensing of a single product and whose barrel (1) delimits a single product chamber (7) and is extended in a single nose (30) whose end (32) has a single dispensing orifice (33), characterized in that the plunger (15) simultaneously constitutes the piston of the pressurisation means.

15. A dispensing device according to claim 14, as related to claim 13, characterized in that the tubular part of the pressure stabiliser (50) has two cylindrical bearing surfaces (51, 52) with different diameters joined by a frustoconical portion (53) whose small base is formed by the transverse partition (54) with a passage opening (55), the cylindrical bearing surface with the smaller diameter (52) being fitted in a part adjacent to the large base of a substantially frustoconical tip (31'c) of the nose (30') whose end (32') is formed by the portion adjacent to the small base of the said tip (31'c), and the said tubular part of the pressure stabiliser (50) being held in position by elastic catch engagement (49) of its cylindrical bearing surface with the larger diameter (51) in the nose (30').

16. A dispensing device according to one of claims 14 or 15, characterized in that the stopper intended to obturate the dispensing orifice (33) of the nose (30) is formed by the bottom (40) of a detachable cap (39) intended to cover the nose assembly (30).

17. A dispensing device according to one of claims 14 to 16, characterized in that the tubular barrel (1) has, near its first end (2), a peripheral step (4) projecting towards the inside, which is elastically catch engaged in a peripheral groove (37) arranged in the external face of a cylindrical and tubular centring bearing surface (36) provided at one end of the nose (30), the nose being fitted in the first end (2) of the tubular barrel (1) by means of the said centring surface (36), the first end (2) of the barrel (1) bearing against an external peripheral shoulder (34) of the nose (30).

18. A dispensing device according to claim 17, characterized in that the detachable cap (39) has, on its bottom (40), a projection (41) pointing towards the interior of the cap, which projection penetrates at least partly into the end (32) of the nose (30) in order to obturate the dispensing orifice (33) in a leakproof manner when the cap (39) is engaged and fixed to the nose (30) by screwing the cap on to the nose until the cap (39) comes to bear against the external peripheral shoulder (34) of the nose (30).

19. A dispensing device according to claim 18, characterized in that the cap (39) carries several internal and radial fins (45) distributed around, and at a distance from, the projection (41) in order to centre the cap (39) on the end (32) of the nose (30) and to guide the projection (41) into the position obturating the dispensing orifice (33), as the cap (39) is fixed on to the nose (30).

20. A dispensing device according to one of claims 14 to 19, as related to claim 7, characterized in that the skirt (19) is joined to the plunger (15) by a shoulder of the plunger against which the sole restoring spring (23) bears and is centred at one of its ends.

21. A dispensing device according to one of claims 14 to 20 as related to claim 10, characterized in that the bead (9) for centring the end wherewith the sole restoring spring (23) bears against the internal partition (5) is situated between the pressurisation orifice (6) and the internal socket (10).

22. A dispensing device according to one of claims 1 to 13, for the simultaneous dispensing of two products, characterized in that the tubular barrel (61) has an internal and axial wall (64) which delimits two adjacent product chambers (67) in the barrel, which are separated from each other, whereof each is intended to contain a charge of one of the two products to be dispensed, the barrel (61) also containing two sets of pressurisation means (65, 76, 78, 79, 70, 83, 84, 86, 89) which are symmetrical in relation to the said internal wall (64), the plunger (75) being mounted on the barrel so as to simultaneously push back the two pistons (76) of these sets of pressurisation means against one restoring spring (83) for each of the pistons (76) when the plunger (75) is being depressed towards the interior of the barrel (61).

23. A dispensing device according to claim 22, characterized in that each of the two restoring springs (83) is accommodated between the barrel (61) and the tubular part (70) of the corresponding set of the pressurisation means.

24. A dispensing device according to one of claims 22 or 23, characterized in that the barrel (61) is extended in two noses (90), whereof each has a single dispensing orifice (93), and which are fixed to a common fitted end fitting (96) in the barrel (61), so that each dispensing orifice (93) can only dispense the product ejected from one of the two product chambers (67), the stopper obturating each dispensing orifice (93) being formed by the bottom of a cap (99) which is screwed on to the end (92) of the corresponding nose (90).

25. A dispensing device according to one of claims 22 or 23, characterized in that the barrel (61) is extended in a single nose (90') traversed by two ducts (95) separated from each other and each leading to one of two adjacent dispensing orifices (93') in the end (92') of the nose (90') whereon there is screwed a single stopper (99') for obturating the two dispensing orifices (93'), the nose comprising an end fitting (96') wherewith it is fitted in the barrel (61) so that each of the two ducts (95) of the nose should only communicate with one of the two product chambers (67) delimited in the barrel (61).

## Patentansprüche

1. Abgabevorrichtung für dosierte Mengen mindestens eines verhältnismäßig viskosen Produkts, insbesondere eines kosmetischen Produkts, mit einem röhrchenförmigen Körper (1), der mindestens eine Produktkammer (7) umschließt, die eine Charge eines abzugebenden Produkts enthält und die sich an einem ersten Ende (2) in Form mindestens einer Nase (30) fortsetzt, deren Spitze (32) mindestens eine Abgabeöffnung (33) mit kleinem Durchmesser besitzt, die durch Befestigen einer abnehmbaren Kappe (39) auf der entsprechenden Nase (30) dicht verschlossen werden kann, und der auch druckerzeugende Mittel enthält, die von einem von außerhalb des Körpers (1) zugänglichen Druckknopf (15) betätigt werden können und die ein Luftvolumen unter Druck in jede Produktkammer (7) einbringen, so daß eine dosierte Menge des entsprechenden Produkts aus einer entsprechenden Abgabeöffnung (33) einer Nase (30) herausgetrieben wird, wenn die Kappe (39) abgezogen ist und der Druckknopf (15) von einer Ausgangsposition und gegen den Druck mindestens einer Spannfeder ins Innere des Körpers (1) hineingeschoben wird, wobei jede Spannfeder (23) den Druckknopf (15) aus dem Körper heraus in seine Ausgangsposition schiebt und es den druckerzeugenden Mitteln ermöglicht, jede Produktkammer (7) auf der Seite des zweiten Endes (3) des Körpers (1) dicht zu verschließen, dadurch gekennzeichnet, daß die druckerzeugenden Mittel für jedes Produkt eine Einheit bilden, die einerseits ein Klappenventil, dessen bewegliche Verschlußdichtung (26) mit einem Kolben, der den Druckknopf (15) bei seinen Verschiebungen begleitet, verbunden ist und in abdichtender Weise gegen einen Ventilsitz (8) gepresst wird, der eine Drucköffnung (6) einfaßt, die in einer inneren Trennwand (5) des Körpers (1) ausgenommen ist, sobald der Druckknopf (15) in seine Ausgangsposition zurückgeschoben ist, wobei die Verschlußdichtung (26) von ihrem Sitz (8) beabstandet ist, wenn der Druckknopf (15) in das Innere des Körpers (1) hineingeschoben ist, und andererseits eine bewegliche Schürze (19) aufweist, die mit dem den Druckknopf (15) bei seinen Verschiebungen begleitenden Kolben verbunden ist und zusammen mit einem röhrchenförmigen Teil (10) des Körpers (1) eine Druckkammer (29) mit variablem Volumen umgrenzt, daß jede Druckkammer (29) ein maximales Volumen besitzt und dann mit der umgebenden Atmosphäre in Verbindung steht, wenn der Druckknopf (15) seine Ausgangsposition einnimmt, und daß jede Druckkammer (29) ein verringerbares Volumen besitzt und von der umgebenden Atmosphäre isoliert wird, indem die entsprechende Schürze (19) in abdichtenden und gleitenden Kontakt gegen das entsprechende röhrchenförmige Teil (10) des Körpers (1) kommt, sobald der Druckknopf (15) ins Innere des Körpers (1) hineingeschoben wird, so daß die in jeder Druckkammer (29) komprimierte Luft durch die entsprechende Drucköffnung (6) in die entsprechende Produktkammer (7) strömt.

2. Abgabevorrichtung nach Anspruch 1, dadurch gekennzeichnet, daß die Verschlußdichtung (26) jeder Einheit von druckerzeugenden Mitteln mit dem entsprechenden Kolben über einen Stiel (24) verbunden ist, der sich ins Innere des Körpers (1) erstreckt.

3. Abgabevorrichtung nach Anspruch 2, dadurch gekennzeichnet, daß jede Verschlußdichtung (26) mit dem entsprechenden Kolben durch elastisches Einrasten verbunden ist.

4. Abgabevorrichtung nach Anspruch 3, dadurch gekennzeichnet, daß jeder Stiel (24) mit dem entsprechenden Kolben einstückig ist und an seinem freien Ende ein verbreitertes und elastisch deformierbares Kopfteil (25) besitzt, das in einem in der entsprechenden Verschlußdichtung (26) ausgenommenen Loch elastisch einrastet.

5. Abgabevorrichtung nach Anspruch 3 dadurch gekennzeichnet, daß jeder Stiel (24') mit der entsprechenden Verschlußdichtung (26') einstückig ist und in seinem Teil des freien Endes (25') von mindestens einem umlaufenden Wulst (46) eingefaßt ist, durch den der Stiel (24') elastisch in eine entsprechende Nut (48) eingerastet ist, die in der Seitenwand einer Vertiefung (47) gebildet ist, die in dem entsprechenden Kolben ausgenommen ist und in das freie Ende (25') des Stiels (24') eingreift.

6. Abgabevorrichtung nach einem der Ansprüche 1 bis 5, dadurch gekennzeichnet, daß jede Schürze (19) eine im wesentlichen kegelstumpfartige Form besitzt und mit dem entsprechenden Kolben über ein erstes Ende verbunden ist, und daß das zweite Ende (20) der Schürze frei ist und entlang des entsprechenden röhrchenförmigen Teils (10) gleitet, das zwei endweise ausgerichtete Führungskegelstümpfe (13, 14) besitzt, von denen der eine Kegelstumpf (13) einen größeren Querschnitt besitzt als der andere Kegelstumpf (14), so daß das freie Ende (20) der Schürze (19) in nicht abdichtender Weise entlang des einen Kegelstumpfes (13) auf einem ersten Abschnitt des Kompressionsweges des Druckknopfs (15) gleitet, wenn dieser ins Innere des Körpers (1) von seiner Ausgangsposition hineingeschoben wird, während das freie Ende (20) der Schürze (19) auf dem verbleibenden Abschnitt des Kompressionsweges des Druckknopfes (15) abdichtend entlang des anderen Kegelstumpfes (14) gleitet.

7. Abgabevorrichtung nach Anspruch 6, dadurch gekennzeichnet, daß jede Schürze (19) mit dem entsprechenden Kolben einstückig ist.

8. Abgabevorrichtung nach Anspruch 6 oder 7, dadurch gekennzeichnet, daß sich jede Schürze (19) zu ihrem freien Ende (20) aufweitet und im Inneren des entsprechenden röhrchenförmigen Teils (10) gleitet, das eine Hülse im Inneren des Körpers (1) darstellt, wobei diese Hülse von der entsprechenden inneren Trennwand (5) getragen ist und mit dem Führungskegelstumpf (14) mit kleinerem Querschnitt an diese Trennwand anstößt.

9. Abgabevorrichtung nach Anspruch 8, dadurch gekennzeichnet, daß der Kegelstumpf (13) mit größerem Querschnitt auf jeder Hülse (10) von mindestens einer Rille (12) begrenzt ist, die an der Innenfläche der entsprechenden Hülse (10) ausgenommen ist und sich nur über einen Teil der Länge dieser Hülse erstreckt.

10. Abgabevorrichtung nach Anspruch 8 oder 9, dadurch gekennzeichnet, daß jede Spannfeder (23) an einem ihrer Enden gegen die entsprechende innere Trennwand (5) anschlägt und an diesem Ende um einen Wulst (9) zentriert ist, der die entsprechende Drucköffnung (6) einfaßt, der in die entsprechende Druckkammer (29) ragt und der von der entsprechenden inneren Trennwand (5) getragen ist.

11. Abgabevorrichtung nach einem der Ansprüche 8 bis 10, dadurch gekennzeichnet, daß jeder Kolben einen Seitenkragen (18) besitzt, der die Schürze (19) mit Abstand umläuft und damit zusammen eine Ringkammer (22) mit verschlossenem Boden (21) begrenzt, in der die innere Hülse (10) geführt ist und zu liegen kommt, wenn der Druckknopf (15) und der Kolben in den Körper (1) hineingeschoben werden, wobei der verschlossene Boden (21) gegen die entsprechende Hülse in Anschlag kommt, so daß der Kompressionsweg des Kolbens begrenzt wird, dessen Seitenkragen (18) ebenfalls in einer weiteren Ringkammer (11) geführt ist und darin aufgenommen wird, die im Körper (1) um die entsprechende innere Hülse (10) angebracht ist.

12. Abgabevorrichtung nach einem der Ansprüche 1 bis 11, dadurch gekennzeichnet, daß jede innere Trennwand (5) im wesentlichen senkrecht zur Achse (A) des röhrchenförmigen Körpers (1) angeordnet ist und daß sich der entsprechende Kolben, die entsprechende Verschlußvorrichtung (26) und die entsprechende Schürze (19) jeder Einheit von druckerzeugenden Mitteln axial im Körper (1) verschieben, und daß außerdem die Schürze (19) und die entsprechende Drucköffnung (6), die Verschlußdichtung (26) und der entsprechende Ventilsitz (8) sowie gegebenenfalls der entsprechende Stiel (24) und/oder der Seitenkragen (18) des entsprechenden Kolbens und-/oder der Wulst (9) der entsprechenden Trennwand (5) koaxial ausgerichtet sind.

13. Abgabevorrichtung nach einem der Ansprüche 1 bis 12, dadurch gekennzeichnet, daß in jeder Nase (30') ein Druckstabilisator (50) für jede Abgabeöffnung (33') angebracht ist, der ein röhrchenförmiges Teil aufweist, dessen innerer Durchtritt, durch den eine dosierte Menge des aus einer entsprechenden Produktkammer (7) ausgestoßenen Produkts zur entsprechenden Abgabeöffnung (33') gelangt, von einer quer angeordneten Trennwand (54) teilweise verschlossen ist, die von einer Durchtrittsöffnung (55) durchbohrt ist, deren Querschnitt kleiner ist als derjenige der entsprechenden Abgabeöffnung (33').

14. Abgabevorrichtung nach einem der Ansprüche 1 bis 13 zur Abgabe eines einzigen Produkts, wobei der Körper (1) eine einzige Produktkammer (7) umschließt und sich in Form einer einzigen Nase (30) fortsetzt, deren Ende (32) eine einzige Abgabeöffnung (33) besitzt, dadurch gekennzeichnet, daß der Druckknopf (15) auch gleichzeitig den Kolben der druckerzeugenden Mittel darstellt.

15. Abgabevorrichtung nach Anspruch 14, beispielsweise gemäß der Ausführungsform nach Anspruch 13, dadurch gekennzeichnet, daß das röhrchenförmige Teil des Druckstabilisators (50) zwei zylindrische Abschnitte (51, 52) mit unterschiedlichem Durchmesser besitzt, die durch einen Kegelstumpf (53) verbunden sind, dessen kleine Basis durch die quer angeordnete Trennwand (54) mit der Durchtrittsöffnung (55) gebildet ist, wobei der zylindrische Abschnitt mit kleinerem Durchmesser (52) in einem zur großen Basis benachbarten Teil einer im wesentlichen kegelstumpfförmigen Spitze (31'c) der Nase (30') eingefaßt ist, dessen Spitze (32') von dem zu der kleinen Basis dieser Spitze (31'c) benachbarten Teil gebildet ist und wobei das röhrchenförmige Teil des Druckstabilisators (50) durch elastisches Einrasten (49) seines zylindrischen Abschnitts mit größerem Durchmesser (51) in der Nase (30') an seinem Platz gehalten wird.

16. Abgabevorrichtung nach Anspruch 14 oder 15, dadurch gekennzeichnet, daß der Stopfen zum Verschließen der Abgabeöffnung (33) der Nase (30) aus dem Boden (40) einer abnehmbaren, zum Abdecken der gesamten Nase (30) bestimmten Kappe (39) gebildet ist.

17. Abgabevorrichtung nach einem der Ansprüche 14 bis 16, dadurch gekennzeichnet, daß der röhrchenförmige Körper (1) in der Nähe seines ersten Endes (2) einen nach innen vorragenden umlaufenden Absatz (4) besitzt, der elastisch in eine umlaufende Nut (37) einrastet, die in der Außenseite eines zylindrischen, röhrchenförmigen und an einem Ende der Nase (30) vorgesehenen Zentrierungsabschnittes (36) ausgenommen ist, und daß die Nase in das erste Ende (2) des röhrchenförmigen Körpers (1) mit Hilfe dieses Zentrierungsabschnittes (36) eingesetzt ist, wobei das erste Ende (2) des Körpers (1) gegen eine umlaufende, äußere Schulter (34) der Nase (30) in Anschlag ist.

18. Abgabevorrichtung nach Anspruch 17, dadurch gekennzeichnet, daß die abnehmbare Kappe (39) an ihrem Boden (40) einen Noppen (41) besitzt, der in die Kappe hineinragt und mindestens teilweise in die Spitze (32) der Nase (30) eindringt, so daß die Abgabeöffnung (33) dicht verschlossen wird, wenn die Kappe (39) auf der Nase (30) angebracht und fixiert wird, indem die Kappe auf die Nase aufgeschraubt wird, bis die Kappe (39) gegen die umlaufende äußere Schulter (34) der Nase (30) in Anschlag kommt.

19. Abgabevorrichtung nach Anspruch 18, dadurch gekennzeichnet, daß die Kappe (39) mehrere innere und radial ausgerichtete Flügel (45) trägt, die um den Noppen (41) beabstandet angeordnet sind, so daß beim Fixieren der Kappe (39) auf der Nase (30) die Kappe (39) auf der Spitze (32) der Nase (30) zentriert und der Noppen (41) in die Verschlußposition für die Abgabeöffnung (33) geführt wird.

20. Abgabevorrichtung nach einem der Ansprüche 14 bis 19, beispielsweise nach der Ausführungsform des Anspruchs 7, dadurch gekennzeichnet, daß die Schürze (19) über eine Schulter des Druckknopfs mit dem Druckknopf (15) verbunden ist, gegen die die einzige Spannfeder (23) in Anschlag kommt und sich mit einem ihrer Enden zentriert.

21. Abgabevorrichtung nach einem der Ansprüche 14 bis 20, beispielsweise nach der Ausführungsform des Anspruchs 10, dadurch gekennzeichnet, daß der Wulst (9) für die Zentrierung des Endes, mit dem die einzige Spannfeder (23) gegen die innere Trennwand (5) in Anschlag kommt, zwischen der Drucköffnung (6) und der inneren Hülse (10) angeordnet ist.

22. Abgabevorrichtung nach einem der Ansprüche 1 bis 13 zur gleichzeitigen Abgabe zweier Produkte, dadurch gekennzeichnet, daß der röhrchenfönmige Körper (61) eine innere axiale Wand (64) besitzt, die im Körper zwei benachbarte, voneinander isolierte Produktkammern begrenzt, von denen jede zur Aufnahme einer Charge von einem der beiden abzugebenden Produkten bestimmt ist, und daß der Körper 61 auch zwei Anordnungen von druckerzeugenden Mitteln (65,76,78,79,70,83,84,86,89) enthält, die zur Innenwand (64) symmetrisch angeordnet sind, und daß der Druckknopf (25) auf dem Körper derart angeordnet ist, daß die beiden Kolben (76) dieser Anordnungen von druckerzeugenden Mitteln gegen eine Spannfeder (83) für jeden der Kolben (76) gleichzeitig zurückgeschoben werden, wenn der Druckknopf (75) in den Körper (61) eingeschoben wird.

23. Abgabevorrichtung nach Anspruch 22, dadurch gekennzeichnet, daß jede der beiden Spannfedern (83) zwischen dem Körper (61) und dem röhrchenförmigen Teil (70) der entsprechenden Anordnung der druckerzeugenden Mittel angebracht ist.

24. Abgabevorrichtung nach Anspruch 22 oder 23, dadurch gekennzeichnet, daß sich der Körper (61) in Form von zwei Nasen (90) fortsetzt, von denen jede eine einzige Abgabeöffnung (93) besitzt und die mit einem gemeinsamen Ansatzstück (96) in den Körper (61) derart eingesetzt sind, daß jede Abgabeöffnung (93) nur dasjenige Produkt abgeben kann, das aus einer der beiden Produktkammern (67) ausgestoßen wird, wobei der Verschlußstopfen für jede Abgabeöffnung (93) durch den Boden einer Kuppel (99) gebildet ist, die auf die Spitze (92) der entsprechenden Nase (90) aufgeschraubt wird.

25. Abgabevorrichtung nach Anspruch 22 oder 23, dadurch gekennzeichnet, daß sich der Körper (61) in Form einer einzigen Nase (90') verlängert, durch die beide Leitungen (95) laufen, die voneinander getrennt sind und jeweils zu einer der beiden Abgabeöffnungen (93') führen die in der Spitze (92') der Nase (90'), auf die ein einziger Verschlußstopfen (99') für die beiden Abgabeöffnungen (93') aufgeschraubt ist, benachbart sind, und daß die Nase ein Ansatzstück (96') aufweist, mit dem sie in den Körper (61) derart eingesetzt ist, daß jede der beiden Leitungen (95) der Nase mit einem der beiden in dem Körper (61) vorhandenen Produktkammern (67) in Verbindung steht.

17

EP 0 214 012 B1

FIG. 1

FIG. 2

FIG. 3

FIG. 4

FIG. 5

FIG. 6

FIG. 8

FIG. 7

2